Europäisches Patentamt

European Patent Office

Office européen des brevets

(19)

(11) **EP 1 059 596 A1**

(12) **EUROPEAN PATENT APPLICATION**

(43) Date of publication:
**13.12.2000 Bulletin 2000/50**

(51) Int. Cl.[7]: **G06F 17/60**, G06F 17/30

(21) Application number: **00111466.9**

(22) Date of filing: **27.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.06.1999 EP 99111402**

(71) Applicant:
**International Business Machines Corporation Armonk, NY 10504 (US)**

(72) Inventors:
• **Facciorusso, Christian**
  **8134 Adliswill (CH)**

• **Field, Simon**
  **8134 Adliswill (CH)**
• **Hoffner, Yigal**
  **8041 Zurich (CH)**
• **Schade, Andreas**
  **8134 Aldliswil (CH)**

(74) Representative:
**Klett, Peter Michael**
**International Business Machines Corporation,**
**Säumerstrasse 4**
**8803 Rüschlikon (CH)**

(54) **Handling unknown properties in virtual market places**

(57)    A computerized method (10), encoded on a computer readable medium, is provided for matching offers and buyers in a virtual market place. The method (10) includes a special value (U) for properties with unknown values in virtual market place constraints and its propagation. The method (10) applies the following rules in constraint evaluation: (a) any expression other than logical expressions using AND an OR operators yield the special value (U) if any of their constituent parts yields the special value; (b) logical AND and OR operation rules are applied to the expressions to yield results, such as TRUE , FALSE, or UNKNOWN, indicating whether or not constraints are or may be met; and (c) if the entire constraint applied to a certain set of properties yields the special value (U), a logical value, such as TRUE or FALSE, is returned which indicates an unknown property, thereby permitting constraints to be formulated without any prior knowledge on the available properties.

FIG. 1

EP 1 059 596 A1

## Description

### Background of the Invention

The invention relates to methods of facilitating e-commerce and more specifically, methods which allows customers using Virtual Market Places to search for offers in a huge offer-space populated by various providers. Such a search generally has the aim of narrowing down the offer-space to a set of offers that match the customer's requirements. Conversely, for certain offer types, especially non-product service-oriented offers, it is necessary to filter potential clients by matching requirements associated with the service offer against client properties. This constitutes a symmetric match-making paradigm which is implemented by some match-making facility at the heart of any Virtual Market Place architecture.

Properties of clients and offers are represented as typed name-value lists. Each property is referred to by a unique property name. The property itself has a certain type such as integer, string or a more complex structured type (record, sequence), and an associated value.

Traditionally, client constraints or offer constraints are represented by Boolean expressions over properties values. Therefore, these constraints correspond to logical forms that do not have a logical value itself. They can only be evaluated to a logical value if values for the variables are supplied, that is, the logical form of the constraint is applied to a certain property set as defined by the offer the constraint is matched with.

A logical value of 〈TRUE〉 returned from the constraint evaluation represents a successful match of the constraint with the supplied property set.

When client and offer constraints are matched with both client and offer properties, it is often the case that the constraint script refers to properties which do not exist in a particular set of offer properties. Conversely, this can also happen when offer constraints refer to properties the client does not show.

Further, client and offer properties are typed, i.e., they can only assume a value that corresponds with the property type. Resolving a property name used in a constraint means replacing it with the value this particular property has in the set of properties the match-making is applied to. When the value of a property is unknown, this results in a nonmatch and therefore, this corresponding offer is not considered by the client. A need exists for a means of dealing with unknown properties such that potential matches between clients and offers will also include those pairs which might be matches, but for the unknown property.

### Summary of the Invention

A method is provided which allows customers using Virtual Market Places to search for offers in a huge offer-space populated by various providers in a manner which overcomes the problems and meets the needs identified above. This is accomplished by representing the value of an unknown offer/client property in virtual market place constraints by a special dedicated value UNKNOWN.

In an advantage of the invention, constraints can be formulated without any prior knowledge on the available properties. This is important in market places where clients might not have any idea about what is being offered and how this is described in terms of properties.

In another advantage, the method can also be used in symmetrical match-making. This means that offer constraints can be formulated without knowing any of the properties clients may potentially have.

In another advantage, it is certain that a consistent logical value is returned when evaluating a constraint.

In another advantage, as constraints are formulated by client/providers in virtual market places to exclude uninteresting offers/clients from further consideration, the method gives a "benefit of the doubt" to those offers/clients which could not be excluded with certainty. Conversely, depending on the protocol established in the Virtual Market Place, the method of the invention may be used to exclude any potential but uncertain matches from consideration in a 〈〈if in doubt, leave it out〉〉policy.

### Brief Description of the Drawings :

FIG. **1** is a flow chart of the method of the invention.
FIG. **2** is an abstract syntax tree (AST) of the expression (a+b)*(c-d) .
FIG. **3** is a decision tree illustrating post-order traversal and evaluation of an AST.
FIG. **4** is a diagram illustrating recursive propagation of unknown values.
FIG. **5A** is a table of the logical OR expression.
FIG. **5B** is a table of the logical AND expression.

### Detailed Description of the Preferred Embodiment(s) :

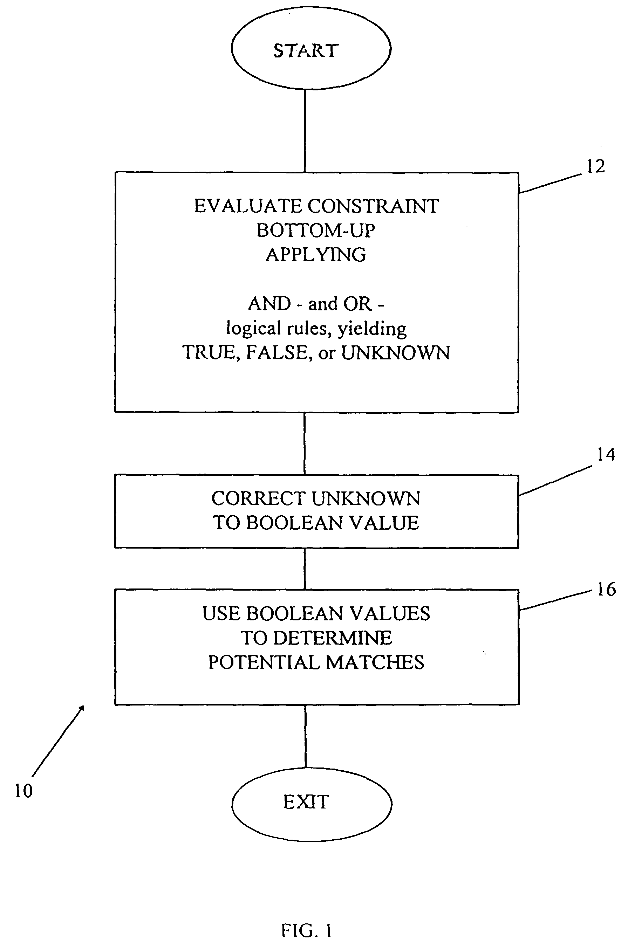

Referring now to FIG. **1**, the invention is a method 10 which overcomes the problems and meets the needs identified above by representing the value of an unknown property by a special, dedicated value UNKNOWN. In a first step 12, a constraint is evaluated in a bottom-up fashion applying modified AND- and OR-logical operation rules and returning a special value UNKNOWN for an expression if any of its constituent parts yield UNKNOWN. In a second step 14, UNKNOWN values are corrected to Boolean values. In a third step 16, the resulting Boolean values are used to determine potential matches in a Virtual Market Place.

In a constraint, any property can assume the value UNKNOWN depending on the particular property set the constraint is applied to.

Assuming a special value for unknown properties requires that how these unknown values influence the evaluation of any expressions they are parts of also be specified.

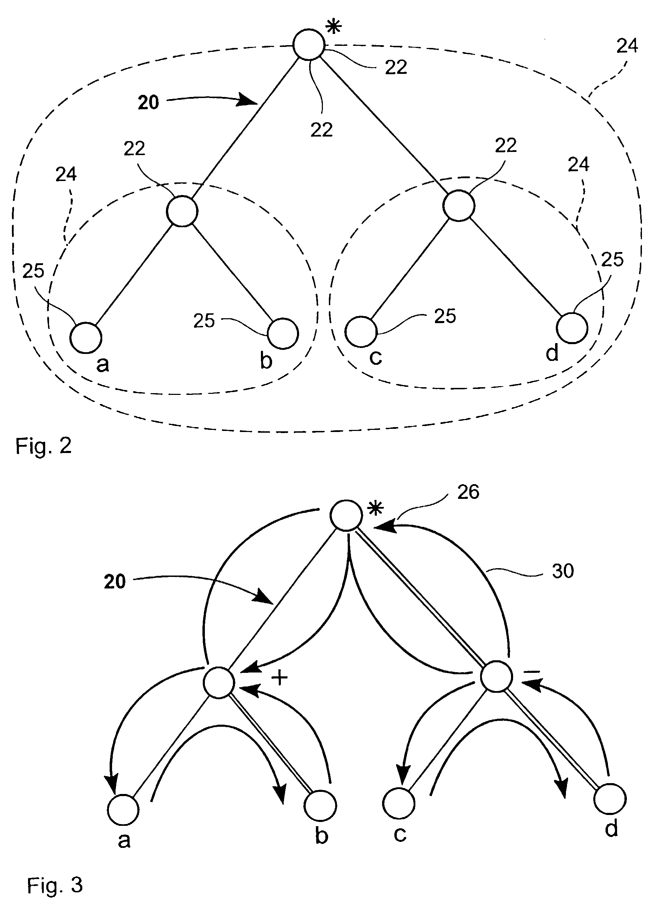

Referring now to FIG. **2**, once compiled, constraints scripts are represented by an abstract syntax tree (AST) 20 in which branch nodes 22 are operands specifying how to combine the sub trees 24. The leaf nodes 25 represent references to properties. In an expression, such as (a+b)*(c-d) , and its corresponding AST 20, leaf nodes 25 are constants or property references, and branch nodes are the operators.

The evaluation of an expression is performed by evaluating its corresponding AST, e.g., 20. This is done by traversing the tree 20 in post-order, and hence retaining operator precedence. Post-order means that deeper nodes 22 are evaluated before higher nodes (bottom-up). The post-order traversing and evaluation of the AST 20 is presented in FIG. 3. The arrow head 26 at the ending of an arc 30 indicates the evaluation of the node/sub-tree 22/24.

The evaluation of the AST 20 depicted in FIG. 3, in sequential order proceeds as follows:

| | |
|---|---|
| evaluate a | "retrieve the value of a" |
| evaluate b | "retrieve the value of b" |
| evaluate a+b = x | "assign the result temporarily to x" |
| evaluate c | "retrieve the value of c" |
| evaluate d | "retrieve the value of d" |
| evaluate c-d = y | "assign the result temporarily to y" |
| evaluate x*y = (a+b)*(c-d) | "retrieve the value x and y and compute x*y" |

The prior art evaluation method does not work properly if the value of any of the leaf properties a, b, c or d would be unknown.

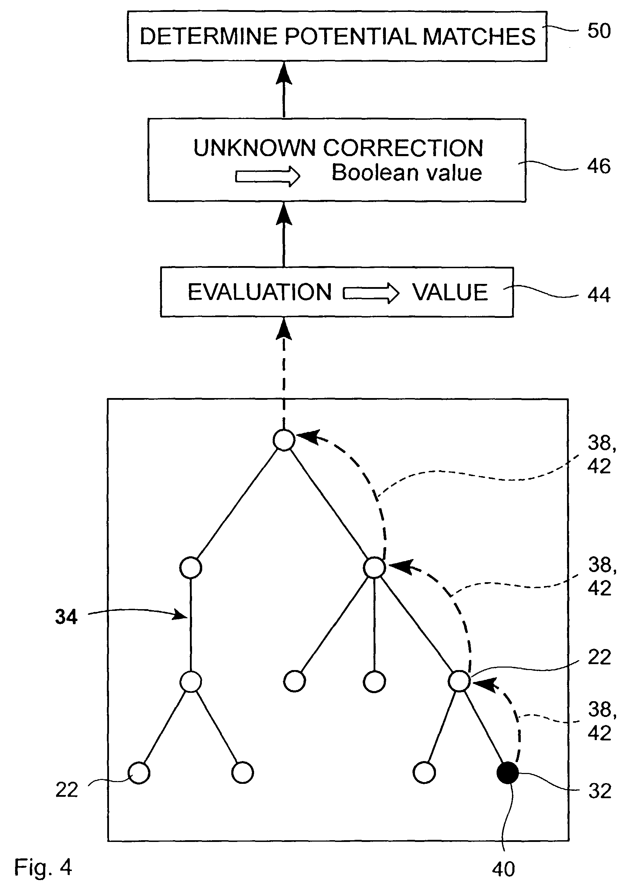

Referring now to FIG. 4, the method 10 of the invention modifies the above prior art evaluation method so that unknown values 32 are propagated upwards along the edges of a more complex AST 34, applying the following recursive propagation rules:

1. Any expression other than logical expressions using AND an OR operators yield UNKNOWN if any of their constituent parts yields UNKNOWN.

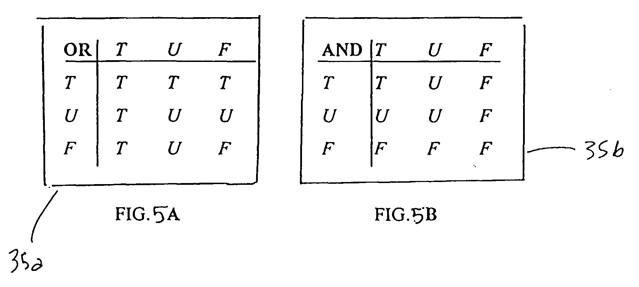

2. Using the abbreviations *T*, *F*, and *U* for the values TRUE, FALSE, and UNKNOWN respectively, logical AND and OR expression are affected as described in the operation tables 35a and 35b of FIGS. **5A** and **5B**.

3. If the entire constraint applied to a certain set of properties yields UNKNOWN, a logical value such as TRUE (or FALSE, depending on the protocol) is returned.

The resulting logical value may then be used to determine a potential match in the virtual market place.

In a first step 36, the UNKNOWN values 32 are recursively propagated for a slightly more complex abstract syntax tree 34, as illustrated by the dashed arcs 38. Assume the value 32 of the solid black leaf node 40 is UNKNOWN. The result yielded by the operations 42 combining the UNKNOWN value are computed according to the above rules one or two, respectively. In a second step 44, it is determined whether the result for evaluating the entire tree 34 can still be UNKNOWN. In a third step 46, this return value is narrowed to a normal Boolean verdict or value in rule 3. In a fourth step 50, the Boolean value is used in an evaluation using standard Boolean operation rules to determine potential matches in the Virtual Market Place.

In an alternate embodiment, a medium, such as a computer storage device or a signal transmitted via the Internet or by other known means, is encoded with the method 10.

An advantage of the method 10 is that constraints can be formulated without any prior knowledge on the available properties. This is important in market places where clients might not have any idea about what is being offered and how this is described in terms of properties.

Another advantage of the method 10 is that it can also be used in symmetrical match-making. This means that offer constraints can be formulated without knowing any of the properties clients may potentially have.

Another advantage of the method 10, it is now certain that a consistent logical value will be returned when evaluating a constraint.

Another advantage is that, as constraints are formulated by client/providers in Virtual Market Places to exclude uninteresting offers/clients from further consideration, the method 10 gives a "benefit of the doubt" to those offers/clients which could not be excluded with certainty. Conversely, depending on the protocol established in the Virtual Market Place, the method 10 of the invention may be used to exclude any potential but uncertain matches from consideration in a 〈 if in doubt, leave it out 〉policy.

Thus, depending on the protocol of a particular Virtual Market Place, the maximum amount of useful information is retrievable concerning possible matches in the Virtual Market Place, allowing clients and service providers, for example, to inquire further of the other in an effort to make the best possible match.

Although illustrative embodiments of the method 10 of the invention have been shown and described, a wide range of modification, change, and substitution is contemplated in the foregoing disclosure and in some instances, some features of the present invention may be employed without a corresponding use of the other features. Accordingly, it is appropriate that the appended claims be construed broadly and in a manner consistent with the scope of the invention.

**Claims**

1. A computerized method encoded on a computer readable medium for matching offers and buyers in a virtual market place, characterized in that the method (10) includes a special value (U) for properties with unknown values in virtual market place constraints and its propagation, the method (10) having the following steps:

    a. evaluate the constraint applying the following rules:

        (1) any expression other than logical expressions using AND and OR operators yield the special value if any of their constituent parts yields the special value;
        (2) an AND-operation yields TRUE if both operands are TRUE; FALSE if one operand is FALSE, and the special value in all other cases; and
        (3) an OR-operation yields FALSE if both operands are FALSE; TRUE if one operand is TRUE, and the special value in all other cases;

    b. if the entire constraint applied to a certain set of properties yields the special value (U), a logical value, such as TRUE or FALSE, is returned which indicates an unknown property;
    c. the resulting logical value is used to determine a potential match in the virtual market place, thereby permitting constraints to be formulated without any prior knowledge on the available properties.

2. The method of claim 1 wherein the method (10) is applied to symmetrical match-making, thus permitting offer constraints to be formulated without knowing any of the properties clients may potentially have.

3. The method of claim 1, wherein, in the method (10), constraints are formulated by client/providers in virtual market places which exclude uninteresting offers/clients from further consideration and provide the benefit of the doubt to those offers/clients which could not definitely be excluded.

4. A computer-readable medium, encoded with a computerized method for matching offers and buyers in a virtual market place, characterized in that the method (10) includes a special value (U) for properties with unknown values in virtual market place constraints and its propagation, the method (10) having the following steps:

    a. evaluate the constraint applying the following rules:

        (1) any expression other than logical expressions using AND and OR operators yield the special value (U) if any of their constituent parts yields the special value;
        (2) an AND-operation yields TRUE if both operands are TRUE; FALSE if one operand is FALSE, and the special value in all other cases; and
        (3) an OR-operation yields FALSE if both operands are FALSE; TRUE if one operand is TRUE, and the special value in all other cases;

    b. if the entire constraint applied to a certain set of properties yields the special value (U), a logical value, such as TRUE or FALSE, is returned which indicates an unknown property;
    c. the resulting logical value is used to determine a potential match in the virtual market place, thereby permitting constraints to be formulated without any prior knowledge on the available properties.

5. The medium of claim 4 wherein the method (10) is applied to symmetrical match-making, thus permitting offer constraints to be formulated without knowing any of the properties clients may potentially have.

6. The medium of claim 4, wherein, in the method (10), constraints are formulated by client/providers in virtual market places which exclude uninteresting offers/clients from further consideration and provide the benefit of the doubt to those offers/clients which could not definitely be excluded.

START

EVALUATE CONSTRAINT
BOTTOM-UP
APPLYING

AND - and OR -
logical rules, yielding
TRUE, FALSE, or UNKNOWN

_12_

CORRECT UNKNOWN
TO BOOLEAN VALUE

_14_

USE BOOLEAN VALUES
TO DETERMINE
POTENTIAL MATCHES

_16_

_10_

EXIT

FIG. 1

Fig. 2

Fig. 3

Fig. 4

| OR | T | U | F |
|---|---|---|---|
| T | T | T | T |
| U | T | U | U |
| F | T | U | F |

FIG.5A

35a

| AND | T | U | F |
|---|---|---|---|
| T | T | U | F |
| U | U | U | F |
| F | F | F | F |

35b

FIG.5B

| European Patent Office | EUROPEAN SEARCH REPORT | Application Number EP 00 11 1466 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 884 304 A (DAVIS III JAMES R ET AL) 16 March 1999 (1999-03-16) * column 9, line 54 - column 11, line 64 * | 1,4 | G06F17/60 G06F17/30 |
| A | | 2,3,5,6 | |
| Y | US 5 664 115 A (FRASER RICHARD) 2 September 1997 (1997-09-02) | 1,4 | |
| A | * column 6, line 41 - column 7, line 19 * * column 8, line 65 - column 9, line 44 * | 2,3,5,6 | |
| A | US 5 659 731 A (GUSTAFSON ERIC S) 19 August 1997 (1997-08-19) * column 4, line 49 - column 6, line 35 * | 1-6 | |
| A | EP 0 507 744 A (LEFONS EZIO) 7 October 1992 (1992-10-07) * abstract; figure 5 * * column 7, line 41-46 * * column 8, line 5-51 * | 1,4 | |
| | | | TECHNICAL FIELDS SEARCHED (Int.Cl.7) G06F |

The present search report has been drawn up for all claims

| Place of search | Date of completion of the search | Examiner |
|---|---|---|
| THE HAGUE | 30 June 2000 | Bowler, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 00 11 1466

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2000

| Patent document cited in search report | | Publication date | Patent family member(s) | | Publication date |
|---|---|---|---|---|---|
| US 5884304 | A | 16-03-1999 | US | 5870739 A | 09-02-1999 |
| US 5664115 | A | 02-09-1997 | NONE | | |
| US 5659731 | A | 19-08-1997 | NONE | | |
| EP 0507744 | A | 07-10-1992 | IT<br>US | 1244938 B<br>5398199 A | 13-09-1994<br>14-03-1995 |

For more details about this annex : see Official Journal of the European Patent Office, No. 12/82